# EUROPÄISCHE PATENTSCHRIFT

(11) **EP 4 218 220 B1**
(45) Veröffentlichungstag und Bekanntmachung des Hinweises auf die Patenterteilung: **29.04.2026**
(21) Anmeldenummer: 21763366.8
(22) Anmeldetag: 23.08.2021
(51) Int. Cl.: H04L 67/12, H04L 67/2871, H04L 67/561

(54) **DIAGNOSTIZIEREN DES BETRIEBS EINES EDGE DEVICES**
DIAGNOSING THE OPERATION OF AN EDGE DEVICE
DIAGNOSTIQUER LE FONCTIONNEMENT D'UN DISPOSITIF PÉRIPHÉRIQUE

(30) Priorität: 23.09.2020 DE 102020124839
(43) Veröffentlichungstag der Anmeldung: 02.08.2023
(73) Patentinhaber: Endress+Hauser Process Solutions AG, 4153 Reinach (CH)
(72) Erfinder: GÖBEL, Alexander, 79585 Steinen (DE); KÖLBLIN, Robert, 79539 Lörrach (DE)
(74) Vertreter: Endress + Hauser Group Services (Deutschland) AG+Co. KG
(86) Internationale Anmeldenummer: PCT/EP2021/073244
(87) Internationale Veröffentlichungsnummer: WO 2022/063501

(56) Entgegenhaltungen:
- DE-A1- 102017 123 222
- US-A1- 2007 027 969
- US-A1- 2018 210 430
- US-A1- 2019 320 451
- PRASAD RAJA ET AL: "Static and dynamic polling mechanisms for fieldbus networks", OPERATING SYSTEMS REVIEW, ACM, NEW YORK, NY, US, vol. 27, no. 3, 1 July 1993 (1993-07-01), pages 34 - 45, XP058390930, ISSN: 0163-5980, DOI: 10.1145/155870.155875

## Beschreibung

Die Erfindung betrifft ein Verfahren zum Diagnostizieren des Betriebs eines Edge Devices, wobei das Edge Device über ein oder mehrere Kommunikationsnetzwerke mit einer Vielzahl von Netzwerkteilnehmern in Kommunikationsverbindung steht, wobei das Edge Device über ein weiteres Kommunikationsnetzwerk mit einer Datenbank in Kommunikationsverbindung steht, wobei auf dem Edge Device zumindest eine erste Applikation abläuft, und wobei das Edge Device Daten derjenigen Netzwerkteilnehmer abfragt, welche über einen der ersten Applikation zugänglichen ersten Filter definiert sind.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Ein Edge Device ist eine Vorrichtung, mit der Daten von Feldgeräten in die sogenannte Cloud (eine cloudfähige Datenbank, welcher per Internet kontaktiert werden kann) im Rahmen von digitalen Services transportiert werden können. Für ein Edge Device kann die Ausführung mehrerer Dienste konfiguriert werden. Für einen Benutzer eines digitalen Service werden eine oder mehrere Apps (meist in Form von Webapplikationen) zur Verfügung gestellt. Ein digitaler Service kann beispielsweise den zyklischen Zugriff auf einen oder mehrere Parameter von einem oder mehrerer Feldgeräte zur Voraussetzung haben.

Jeder Zugriff auf ein Feldgerät benötigt eine bestimmte Ausführungszeit, die zum großen Teil von der Übertragungsrate des verwendeten Netzwerkprotokolls, von den angewendeten Verfahren eines Netzwerkprotokolls (bspw. Master-Slave-Kommunikationen) und von den Ausführungszeiten eines Zugriffs im Feldgerät, sowie von den Laufzeiten im Edge Device selbst abhängt. Für einen zyklischen Zugriff werden Zykluszeiten vorgegeben, die sich nach der Dynamik eines Parameterwerts des Feldgeräts richten und damit letzten von der Dynamik des physikalischen Prozesses, den die Feldgeräte beobachten, abhängen.

Wird nun eine große Anzahl von digitalen Services ausgeführt, von welcher jeder zyklische Zugriffe auslöst oder eine große Zahl abzufragender Feldgeräte definiert, kann die gemeinsame Ausführung dazu führen, dass die vorgegebene Zykluszeit überschritten wird. Da dies zu einer Verletzung des Abtasttheorems führen wird, ist die korrekte Funktionsweise, bzw. Auswertung, einer App nicht mehr gegeben. Ob die Grenze der Zykluszeiten überschritten wird, kann nicht im Voraus ermittelt werden, da die Ausführungszeiten zufällige Abweichungen, die mit der jeweiligen Konfiguration eines Edge Devices zusammenhängen, aufweisen können.

Die Patentveröffentlichung US 2019/320451 A1 offenbart ein Verfahren zum Planen der Kommunikation von Feldgeräten in einem drahtlosen Netzwerk eines industriellen Prozesssystems.

Der Erfindung liegt die Aufgabe zugrunde, ein Verfahren vorzustellen, welches eine Überprüfung des korrekten Abfragens von Feldgeräten mittels eines Edge Devices ermöglicht.

Die Aufgabe wird durch ein Verfahren zum Diagnostizieren des Betriebs eines Edge Devices gelöst, wobei das Edge Device über ein oder mehrere Kommunikationsnetzwerke mit einer Vielzahl von Netzwerkteilnehmern in Kommunikationsverbindung steht, wobei das Edge Device über ein weiteres Kommunikationsnetzwerk mit einer Datenbank in Kommunikationsverbindung steht, wobei auf dem Edge Device zumindest eine erste Applikation abläuft, und wobei das Edge Device Daten derjenigen Netzwerkteilnehmer abfragt, welche über einen der ersten Applikation zugänglichen ersten Filter definiert sind, umfassend:
- Ermitteln einer ersten Zykluszeit der ersten Applikation, wobei die erste Zykluszeit die jeweilige Zeitspanne zwischen zwei Abfragen eines in der ersten Applikation definierten Netzwerkteilnehmers bezeichnet; wobei die erste Zykluszeit durch Aufsummieren einer jeweiligen Abfragezeit von jedem einzelnen der in der ersten Applikation, definierten Netzwerkteilnehmer ermittelt wird, wobei jede Abfragezeit aus einem aktiven Abfragezeitanteil und einem passiven Abfragezeitanteil besteht, wobei der aktive Abfragezeitanteil für das Anfragen direkt benötigt wird, und wobei der passive Abfragezeitanteil eine Pause zwischen dem Ende des aktiven Abfragens eines Netzwerkteilnehmers und dem Beginn des aktiven Abfragens des nächsten Netzwerkteilnehmers definiert;
- Vergleichen der ermittelten Zykluszeit mit zumindest einer ersten Anforderungszeit betreffend der in der ersten Applikation definierten Netzwerkteilnehmer;
- Ausgeben einer Information, ob die ermittelte erste Zykluszeit die zumindest eine erste Anforderungszeit überschreitet oder nicht, wobei im Falle, dass die erste Anforderung nicht erfüllt wird, die Information zumindest eine Maßnahme zur Reduktion der ersten Zykluszeit enthält,
wobei der passive Abfragezeitanteil von einem oder mehreren der Netzwerkteilnehmer reduziert wird, indem die Abfrage des nächsten Netzwerkteilnehmers jeweils früher gestartet wird.

Mittels des erfindungsgemäßen Verfahrens soll überprüft werden, ob für die abzufragenden Netzwerkteilnehmer genug Zeit zum Abfragen zur Verfügung steht und somit die Anforderungszeit der Applikation erfüllt werden kann. Auf diese Art und Weise kann sichergestellt werden, dass die erste Applikation verlässliche Ergebnisse liefert, weil beispielsweis eine Verletzung des Abtasttheorems ausgeschlossen werden kann.

Der erste Filter kann dem Edge Device, bzw. der ersten Applikation, frei hinzugefügt werden.

Beispielsweise ist der Filter in einer Datei enthalten, welche in das Edge Device geladen werden kann und welche der ersten Applikation zugänglich gemacht wird.

Bei der Applikation handelt es sich beispielsweise um einen eingangs definierten digitalen Service.

Gemäß einer vorteilhaften Weiterbildung des erfindungsgemäßen Verfahrens ist vorgesehen, dass auf dem Edge Device zumindest eine zweite Applikation abläuft, wobei das Edge Device zusätzlich Daten derjenigen Netzwerkteilnehmer abfragt, welche über einen der zweiten Applikation zugänglichen zweiten Filter definiert sind, wobei zusätzlich eine zweite Zykluszeit der zweiten Applikation ermittelt wird, wobei die zweite Zykluszeit die jeweilige Zeitspanne zwischen zwei Abfragen eines in der zweiten Applikation definierten Netzwerkteilnehmers bezeichnet, wobei anhand der ersten Zykluszeit und der zweiten Zykluszeit eine Gesamtzykluszeitzeit berechnet wird, wobei die Gesamtzykluszeit mit zumindest einer zweiten Anforderungszeit betreffend einen oder mehrere der in der ersten Applikation und/oder zweiten Applikation definierten Netzwerkteilnehmer verglichen wird und wobei eine Information, ob die Gesamtzykluszeit die zweite Anforderungszeit überschreitet oder nicht, ausgegeben wird.

Es können eine Vielzahl weiterer Applikationen vorgesehen sein, welche auf dem Edge Device ablaufen und welche auf einen separaten Filter zugreifen können, welcher Feldgeräte zum Abfragen definiert. Jede der weiteren Applikationen definiert hierbei eine jeweilige zusätzliche Zykluszeit, welcher der Gesamtzykluszeit hinzuberechnet wird.

Gemäß einer ersten Variante des erfindungsgemäßen Verfahrens ist vorgesehen, dass die zweite Zykluszeit durch Aufsummieren einer jeweiligen Abfragezeit von jedem einzelnen der in der zweiten Applikation, definierten Netzwerkteilnehmer ermittelt wird, wobei jede Abfragezeit aus einem aktiven Abfragezeitanteil und einem passiven Abfragezeitanteil besteht.

Der aktive Abfragezeitanteil bezeichnet hierbei denjenigen Zeitanteil, welcher benötigt wird, um eine Information von dem entsprechenden Netzwerkteilnehmer zu erhalten und umfasst somit die Zeitdauer des Absendens und des Übermittelns des requests, die Zeitdauer der Verarbeitung und Datenerstellung des Netzwerkteilnehmers und die Zeitdauer des Absendens und des Übermittelns der Antwort.

Der passive Abfragezeitanteil bezeichnet hierbei denjenigen Zeitanteil, welcher zwischen dem Empfangen der Antwort und dem Beginn der Abfrage des nächsten Netzwerksteilnehmers liegt.

Gemäß einer vorteilhaften Ausgestaltung der ersten Variante des erfindungsgemäßen Verfahrens ist vorgesehen, dass die jeweilige Abfragezeit durch Abfragen von Daten des jeweiligen Teilnehmers durch das Edge Device ermittelt wird. Hierbei wird bei Absenden des requests an den entsprechenden Netzwerkteilnehmer ein Timer gestartet, welcher erst bei Absenden des requests an den nächsten Netzwerkteilnehmer gestoppt wird**.** Vorteilhafterweise wird eine Zeitmarke gesetzt, wenn die Antwort bei dem Edge Device eingeht, um den aktiven und den passiven Abfrageanteil bestimmen zu können.

Gemäß einer vorteilhaften Ausgestaltung der ersten Variante des erfindungsgemäßen Verfahrens ist vorgesehen, dass die jeweilige Abfragezeit vorab ermittelt wird, gespeichert wird und dem Edge Device bekannt gemacht wird. Die Abfragezeiten können hierfür auf einer externen Datenbank oder auf dem Edge Device selbst gespeichert werden. Hierdurch wird der Verfahrensablauf beschleunigt. Es kann vorgesehen sein, die Verfahrensschritte der vorherigen Ausgestaltung auszuführen, um die jeweilige Zykluszeit, insbesondere inklusive dem aktiven und dem passiven Abfrageanteil, bestimmen und anschließend zu speichern. Es kann auch vorgesehen sein, die Verfahrensschritte der vorherigen Ausgestaltung regelmäßig zu wiederholen und zu speichern, um stets die korrekten Zeitwerte verfügbar zu haben.

Bei der Datenbank handelt es sich vorzugsweise um eine cloudfähige Datenbank, welche auf einem Server integriert ist und über das Internet kontaktierbar ist.

Gemäß einer zweiten Variante des erfindungsgemäßen Verfahrens ist vorgesehen, dass die erste Zykluszeit und/oder die zweite Zykluszeit derart bestimmt wird, indem ein Netzwerkteilnehmer erstmalig abgefragt wird, alle weiteren in der ersten Applikation, bzw. in der zweiten Applikation definierten Netzwerkteilnehmer abgefragt werden und diejenige Zeit als erste Zykluszeit und/oder zweite Zykluszeit gemessen wird, welche vergeht, bis der Netzwerkteilnehmer erneut abgefragt wird. Gemäß einer vorteilhaften Weiterbildung des erfindungsgemäßen Verfahrens ist vorgesehen, dass in dem Falle, dass die ermittelte erste Zykluszeit und/oder die Gesamtzykluszeit die zumindest eine Anforderung unterschreitet, die jeweilige Information Angaben zur verfügbaren Zeit bis zum Überschreiten der zumindest einen ersten Anforderung, bzw. zweiten Anforderung, enthält, und wobei die jeweilige Information durch zusätzliches Abfragen der durch das erste Filter, bzw. das zweite Filter, definierten Netzwerkteilnehmer ermittelt wird.

Diese Situation bezeichnet den "Gutfall", in welchem noch Potential für das Hinzufügen weiterer Netzwerkteilnehmer vorhanden ist.

Die Information wird vorteilhafterweise der Datenbank zur Verfügung gestellt, bzw. an die Datenbank übermittelt.

Gemäß einer vorteilhaften Ausgestaltung des erfindungsgemäßen Verfahrens ist vorgesehen, dass die jeweilige Information eine Anzahl möglicher zusätzlicher Netzwerkteilnehmer zumindest eines Gerätetyps enthält, wobei einem Gerätetyp eine durchschnittliche Abfragezeit zugewiesen wird, welche insbesondere per Abfragen von einem der Netzwerkteilnehmer dieses Gerätetyps bestimmt wird, wobei die Anzahl anhand der verfügbaren Zeit und der durchschnittlichen Abfragezeit berechnet wird. Dem Benutzer wird dadurch eine Zahl von Netzwerkteilnehmern mitgeteilt, welche möglich ist, bevor eine Verletzung der Zykluszeit eintritt.

Gemäß einer vorteilhaften Ausgestaltung des erfindungsgemäßen Verfahrens ist vorgesehen, dass im Falle, dass die zweite Anforderung nicht erfüllt wird, die Information zumindest eine Maßnahme zur Reduktion der Gesamtzykluszeit, enthält. Beispielsweise kann der passive Abfragezeitanteil von einem oder mehrerer der Netzwerkteilnehmer reduziert werden. Es kann hierfür vorgesehen sein, einen maximalen passiven Abfragezeitanteil vorzugeben, so dass der individuelle Abfragezeitanteil von zumindest einem bis allen Netzwerkteilnehmer auf diesen reduziert wird. Das Edge Device kann diesen maximalen passiven Abfragezeitanteil anhand der Informationen über die einzelnen Netzwerkteilnehmer und deren Abfragecharakteristiken berechnen.

Gemäß einer vorteilhaften Ausgestaltung des erfindungsgemäßen Verfahrens ist vorgesehen, dass es sich zumindest bei einem der Teil der Netzwerkteilnehmer um Feldgeräte der Automatisierungstechnik handelt. Bei dem Abfragen werden Daten der Feldgeräte abgefragt, insbesondere von den Feldgeräten erhobene physikalische Messwerte eines verfahrenstechnischen Prozesses, Diagnosedaten der Feldgeräte und/oder Statuswerte der Feldgeräte.

Gemäß einer vorteilhaften Ausgestaltung des erfindungsgemäßen Verfahrens ist vorgesehen, dass es sich zumindest bei einem der Teil der Netzwerkteilnehmer um Steuerungskomponenten oder Gateways handelt. Bei dem Abfragen werden Daten der Steuerungskomponenten oder Gateways abgefragt, insbesondere Diagnosedaten der Steuerungskomponenten oder Gateways und/oder Statuswerte der Steuerungskomponenten oder Gateways und/oder, im Falle, dass Feldgeräte mit Gateways verbunden sind, Daten dieser Feldgeräte abgefragt, insbesondere von diesen Feldgeräten erhobene physikalische Messwerte eines verfahrenstechnischen Prozesses, Diagnosedaten dieser Feldgeräte und/oder Statuswerte dieser Feldgeräte .

Des Weiteren wird die Aufgabe durch ein Edge Device gelöst, welches zur Verwendung in dem erfindungsgemäßen Verfahren ausgestaltet ist.

Die Erfindung wird anhand der nachfolgenden Figur näher erläutert. Es zeigt

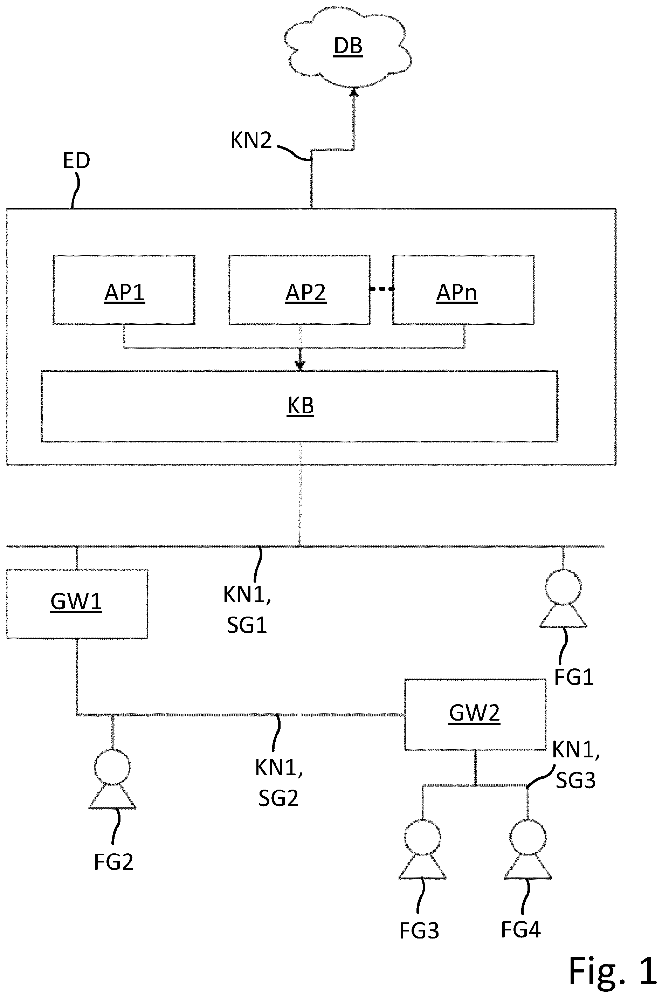

Fig. 1: ein Ausführungsbeispiel des erfindungsgemäßen Verfahrens.

In Fig. 1 ist ein Edge Device ED abgebildet. Das Edge Device ED umfasst eine Betriebselektronik, welche Stacks zur Ausführung mehrerer Applikationen AP1, AP2, APn, sowie einen Kommunikationsbaustein KB.

Das Edge Device ED ist sowohl an ein erstes Kommunikationsnetzwerk KN1, als auch an ein zweites Kommunikationsnetzwerk KN2 angeschlossen. Bei dem ersten Kommunikationsnetzwerk handelt es sich beispielsweise um einen Feldbus der Automatisierungstechnik, an welchen mehrere Netzwerkteilnehmer angeschlossen sind. Bei den Netzwerkteilnehmern handelt es sich um mehrere Feldgeräte FG1, FG2, FG3, FG4, welche zum Erfassen von physikalischen Größen eines verfahrenstechnischen Prozesses, sowie zum Beeinflussen von physikalischen Größen eines verfahrenstechnischen Prozesses ausgestaltet sind. Beispiele für solche Feldgeräte FG1, FG2, FG3, FG4 sind im einleitenden Teil der Beschreibung aufgeführt. Ebenso kann es sich bei den Netzwerkteilnehmern um Steuerungskomponenten oder Gateways GW1, GW2 handeln. Das erste Kommunikationsnetzwerk KN1 kann in mehrere Segmente SG1, SG2 unterteilt werden, welche dasselbe Protokoll, oder ein unterschiedliches Protokoll aufweisen. Die Gateways GW1, GW2 dienen hierbei beispielsweise als Protokollumsetzungseinheit zwischen den verschiedenen Segmenten SG1, SG2. Als Protokolle können alle bekannten Feldbusprotokolle, beispielsweise HART, Profibus PA/DP, Foundation Fieldbus, aber auch Ethernetprotokolle verwendet werden. Es kann auch vorgesehen sein, dass es sich bei manchen der Netzwerkteilnehmer um Remote I/Os handelt, welche die Feldgeräte beispielsweise per HART-oder ASI-Kommunikation abfragen.

Das Edge Device ED fragt zyklisch Daten der Netzwerkteilnehmer ab, welche anschließend den Anwendungsapplikationen AP1, AP2, APn verfügbar gemacht werden und von diesen bearbeitet werden. Die bearbeiteten Daten werden über ein zweites Kommunikationsnetzwerk KN2, bei welchem es sich um das Internet handelt, an eine cloudbasierte Datenbank DB übermittelt, bspw. zu Asset Management-Zwecken oder zu Device Healthcare-Zwecken.

Den Anwendungsapplikationen AP1, AP2, APn werden jeweils entsprechende Filter zur Verfügung gestellt, welche abzufragende Netzwerkteilnehmer definieren. Entsprechend der Filter teilen die Anwendungsapplikationen AP1, AP2, APn dem Kommunikationsbaustein KB die abzufragenden Netzwerkteilnehmer mit. Anschließend fragt der Kommunikationsbaustein KB die entsprechenden Netzwerkteilnehmer zyklisch ab. Pro Netzwerkteilnehmer wird für ein Abfragen eine bestimmte Abfragezeit veranschlagt. Eine solche Abfragezeit besteht aus einem aktiven Abfragezeitanteil, welche für das Anfragen direkt benötigt wird und aus einem passiven Abfragezeitanteil, welcher eine Pause zwischen dem Ende des aktiven Abfragens eines Netzwerkteilnehmers und dem Beginn des aktiven Abfragens des nächsten Netzwerkteilnehmers definiert. Bei einer Vielzahl abzufragender Netzwerkteilnehmer kann es dazu führen, dass das Abtasttheorem verletzt wird und dadurch bei hoch dynamischen Messkurven Fehler auftreten, wenn beispielsweise zwischen zwei Abfragen Peaks in den Messwerte auftreten.

Um zu überprüfen, ob die Anforderungen noch erfüllt sind, wird eine Zykluszeit bestimmt. Als Zykluszeit wird diejenige Zeit bezeichnet, welche vergeht, bis einer der Netzwerkteilnehmer erneut abgefragt wird, bzw. genauer gesagt, dieselbe Variable, derselbe Art eines Wertes, etc. erneut abgefragt wird. Diese kann dadurch bestimmt werden, dass die jeweilige Abfragezeit durch Abfragen von Daten des jeweiligen Teilnehmers durch das Edge Device ermittelt wird oder dass die jeweilige Abfragezeit vorab ermittelt wird und von dem Edge Device ausgelesen wird, beispielsweise aus einer Datenbank.

Diese Zykluszeit wird mit einer Anforderungszeit der ersten Applikation verglichen. Die Anforderungszeit ist eine sogenannte "konfigurierte" Zykluszeit und derart bemessen, dass alle definierten Netzwerkteilnehmer abgerufen werden können und das Abtasttheorem nicht verletzt wird, so dass eine Messkurve fehlerfrei übermittelt werden kann.

Unterschreitet die Zykluszeit die Anforderungszeit, so wird dies dem Anwender als "Gutfall" mitgeteilt. Anschließend können noch weitere Netzwerkteilnehmer hinzugefügt werden. Dem Anwender wird vom Edge Device berechnet, bzw. ausgegeben, wieviele weitere Netzwerkteilnehmer hinzugefügt werden können, bis die Anforderungszeit gerade noch unterschritten bleibt. Hierfür wird eine sogenannte verfügbare Zeit bestimmt. Diese verfügbare Zeit wird aus der Differenz der Anforderungszeit und der ermittelten Zykluszeit berechnet. Aus Kenntnis der Zeit eines Netzwerkteilnehmers kann daraus die Zeit der noch verfügbaren Netzwerkteilnehmer dieses Typs berechnet werden.

Wird die Anforderungszeit überschritten, so wird dies dem Anwender als "Schlechtfall" mitgeteilt. Dem Anwender wird zudem eine Maßnahme zur Verringerung der Zykluszeit mitgeteilt. Beispielsweise kann der passive Abfragezeitanteil der einzelnen Netzwerkteilnehmer reduziert werden, indem die nächste Abfrage jeweils früher gestartet wird.

Es kann vorgesehen sein, dass jede Applikation durch entsprechende Filter mehrere abzufragende Netzwerkteilnehmer definiert. Hier wird eine Gesamtzykluszeit berechnet, welche die jeweiligen Anforderungszeiten von jeder der Applikationen nicht überschreiten darf. Als Maßnahme zur Reduktion der Gesamtzykluszeit kann vorgesehen sein, die Zyklen jeder Applikation nicht nacheinander zu durchlaufen, sondern die Abfragen ineinander zu verschieben, beispielsweise in genügend große passive Abfragezeitanteile, wodurch die Gesamtzykluszeit massiv verringert wird.

Das erfindungsgemäße Verfahren wird insbesondere nach Erstkonfiguration eines Edge Devices ED durchgeführt, um schnell Rückmeldung geben zu können, ob das Edge Device ED das Abfragen der gewünschten Netzwerkteilnehmer leisten kann. Vorteilhafterweise wird das Verfahren auch nach Austausch oder Hinzufügen von Netzwerkteilnehmern durchgeführt.

### Bezugszeichenliste

- AP1, AP2, APn: Applikationen
- DB: Datenbank
- ED: Edge Device
- FG1, FG2, FG3, FG4: Feldgeräte, Netzwerkteilnehmer
- GW1, GW2: Gateways, Netzwerkteilnehmer
- KB: Kommunikationsbaustein
- KN1, KN2: Kommunikationsnetzwerke

## Patentansprüche

1. Verfahren zum Diagnostizieren des Betriebs eines Edge Devices (ED), wobei das Edge Device (ED) über ein oder mehrere Kommunikationsnetzwerke (KN1) mit einer Vielzahl von Netzwerkteilnehmern (FG1, FG2, FG3, FG4, GW1, GW2) in Kommunikationsverbindung steht, wobei das Edge Device (ED) über ein weiteres Kommunikationsnetzwerk (KN2) mit einer Datenbank (DB) in Kommunikationsverbindung steht, wobei auf dem Edge Device (ED) zumindest eine erste Applikation (AP1) abläuft, und wobei das Edge Device (ED) Daten derjenigen Netzwerkteilnehmer (FG1, FG2, ..., GW2) abfragt, welche über einen der ersten Applikation (AP1) zugänglichen ersten Filter definiert sind, umfassend:
- Ermitteln einer ersten Zykluszeit der ersten Applikation (AP1), wobei die erste Zykluszeit die jeweilige Zeitspanne zwischen zwei Abfragen eines in der ersten Applikation (AP1) definierten Netzwerkteilnehmers bezeichnet; wobei die erste Zykluszeit durch Aufsummieren einer jeweiligen Abfragezeit von jedem einzelnen der in der ersten Applikation (AP1), definierten Netzwerkteilnehmer (FG1, FG2, ..., GW2) ermittelt wird, wobei jede Abfragezeit aus einem aktiven Abfragezeitanteil und einem passiven Abfragezeitanteil besteht, wobei der aktive Abfragezeitanteil für das Anfragen direkt benötigt wird, und wobei der passive Abfragezeitanteil eine Pause zwischen dem Ende des aktiven Abfragens eines Netzwerkteilnehmers (FG1, FG2, ..., GW2) und dem Beginn des aktiven Abfragens des nächsten Netzwerkteilnehmers (FG1, FG2, ..., GW2) definiert;
- Vergleichen der ermittelten Zykluszeit mit zumindest einer ersten Anforderungszeit betreffend der in der ersten Applikation (AP1) definierten Netzwerkteilnehmer (FG1, FG2, ..., GW2);
- Ausgeben einer Information, ob die ermittelte erste Zykluszeit die zumindest eine erste Anforderungszeit überschreitet oder nicht, wobei im Falle, dass die erste Anforderung nicht erfüllt wird, die Information zumindest eine Maßnahme zur Reduktion der ersten Zykluszeit enthält, wobei der passive Abfragezeitanteil von einem oder mehreren der Netzwerkteilnehmer reduziert wird, indem die Abfrage des nächsten Netzwerkteilnehmers jeweils früher gestartet wird.

2. Verfahren nach Anspruch 1, wobei auf dem Edge Device (ED) zumindest eine zweite Applikation (AP2) abläuft, wobei das Edge Device (ED) zusätzlich Daten derjenigen Netzwerkteilnehmer (FG1, FG2, ..., GW2) abfragt, welche über einen der zweiten Applikation (AP2) zugänglichen zweiten Filter definiert sind, wobei zusätzlich eine zweite Zykluszeit der zweiten Applikation (AP2) ermittelt wird, wobei die zweite Zykluszeit die jeweilige Zeitspanne zwischen zwei Abfragen eines in der zweiten Applikation (AP2) definierten Netzwerkteilnehmers bezeichnet, wobei anhand der ersten Zykluszeit und der zweiten Zykluszeit eine Gesamtzykluszeitzeit berechnet wird, wobei die Gesamtzykluszeit mit zumindest einer zweiten Anforderungszeit betreffend einen oder mehrere der in der ersten Applikation (AP1) und/oder zweiten Applikation (AP2) definierten Netzwerkteilnehmer (FG1, FG2, ..., GW2) verglichen wird und wobei eine Information, ob die Gesamtzykluszeit die zweite Anforderungszeit überschreitet oder nicht, ausgegeben wird.

3. Verfahren nach Anspruch 2, wobei die zweite Zykluszeit durch Aufsummieren einer jeweiligen Abfragezeit von jedem einzelnen der in der zweiten Applikation (AP2), definierten Netzwerkteilnehmer (FG1, FG2, ..., GW2) ermittelt wird.

4. Verfahren nach Anspruch 3, wobei die jeweilige Abfragezeit durch Abfragen von Daten des jeweiligen Teilnehmers durch das Edge Device (ED) ermittelt wird.

5. Verfahren nach Anspruch 3, wobei die jeweilige Abfragezeit vorab ermittelt wird, gespeichert wird und dem Edge Device (ED) zugänglich gemacht wird.

6. Verfahren nach Anspruch 1 oder 2, wobei die erste Zykluszeit und/oder die zweite Zykluszeit derart bestimmt wird, indem ein Netzwerkteilnehmer (FG1, FG2, ..., GW2) erstmalig abgefragt wird, alle weiteren in der ersten Applikation (AP1), bzw. in der zweiten Applikation (AP2) definierten Netzwerkteilnehmer (FG1, FG2, ..., GW2) abgefragt werden und diejenige Zeit als erste Zykluszeit und/oder zweite Zykluszeit gemessen wird, welche vergeht, bis der Netzwerkteilnehmer (FG1, FG2, ..., GW2) erneut abgefragt wird.

7. Verfahren nach zumindest einem der vorherigen Ansprüche, wobei in dem Falle, dass die ermittelte erste Zykluszeit und/oder die Gesamtzykluszeit die zumindest eine Anforderung unterschreitet, die jeweilige Information Angaben zur verfügbaren Zeit bis zum Überschreiten der zumindest einen ersten Anforderung, bzw. zweiten Anforderung, enthält, und wobei die jeweilige Information durch zusätzliches Abfragen der durch das erste Filter, bzw. das zweite Filter, definierten Netzwerkteilnehmer (FG1, FG2, ..., GW2) mittels des Edge Devices (ED) ermittelt wird.

8. Verfahren nach Anspruch 7, wobei die jeweilige Information eine Anzahl möglicher zusätzlicher Netzwerkteilnehmer (FG1, FG2, ..., GW2) zumindest eines Gerätetyps enthält, wobei einem Gerätetyp eine durchschnittliche Abfragezeit zugewiesen wird, welche insbesondere per Abfragen von einem der Netzwerkteilnehmer (FG1, FG2, ..., GW2) dieses Gerätetyps bestimmt wird, wobei die Anzahl anhand der verfügbaren Zeit und der durchschnittlichen Abfragezeit berechnet wird.

9. Verfahren nach zumindest einem der vorherigen Ansprüche, wobei es sich zumindest bei einem der Teil der Netzwerkteilnehmer (FG1, FG2, ..., GW2) um Feldgeräte der Automatisierungstechnik handelt.

10. Verfahren nach zumindest einem der vorherigen Ansprüche, wobei es sich zumindest bei einem der Teil der Netzwerkteilnehmer (FG1, FG2, ..., GW2) um Steuerungskomponenten oder Gateways handelt.

11. Edge Device (ED), ausgestaltet zur Verwendung in einem Verfahren gemäß zumindest einem der Ansprüche 1 bis 10.

## Claims

1. A method for diagnosing the operation of an edge device (ED), wherein the edge device (ED) is in communication connection with a plurality of network participants (FG1, FG2, FG3, FG4, GW1, GW2) via one or more communication networks (KN1), wherein the edge device (ED) is in communication connection with a database (DB) via a further communication network (KN2), wherein at least a first application (AP1) is running on the edge device (ED), and wherein the edge device (ED) queries data of those network participants (FG1, FG2, ..., GW2) that are defined via a first filter accessible to the first application (AP1), the method comprising:
• Determining a first cycle time of the first application (AP1), the first cycle time specifying the respective time period between two queries of a network participant defined in the first application (AP1); wherein the first cycle time is determined by summing up a respective query time of each individual network participant (FG1, FG2, ..., GW2) defined in the first application (AP1), each query time consisting of an active query time portion and a passive query time portion, the active query time portion being required directly for querying, and the passive query time portion defining a pause between the end of the active querying of one network participant (FG1, FG2, ..., GW2) and the start of the active querying of the next network participant (FG1, FG2, ..., GW2);
• Comparing the determined cycle time with at least a first requirement time relating to the network participants (FG1, FG2, ..., GW2) defined in the first application (AP1);
• Outputting information as to whether the determined first cycle time exceeds the at least one first requirement time or not, wherein, in the event that the first requirement is not met, the information includes at least one measure for reducing the first cycle time, wherein the passive query time portion of one or more of the network participants is reduced by starting the query of the next network participant earlier in each case.

2. The method according to claim 1, wherein at least a second application (AP2) is running on the edge device (ED), wherein the edge device (ED) additionally queries data of those network participants (FG1, FG2, ..., GW2) that are defined via a second filter accessible to the second application (AP2), wherein additionally a second cycle time of the second application (AP2) is determined, the second cycle time specifying the respective time period between two queries of a network participant defined in the second application (AP2), wherein a total cycle time is calculated based on the first cycle time and the second cycle time, wherein the total cycle time is compared to at least a second requirement time relating to one or more of the network participants (FG1, FG2, ..., GW2) defined in the first application (AP1) and/or the second application (AP2), and wherein information is output indicating whether the total cycle time exceeds the second requirement time or not.

3. The method according to claim 2, wherein the second cycle time is determined by summing up a respective query time of each individual network participant (FG1, FG2, ..., GW2) defined in the second application (AP2).

4. The method according to claim 3, wherein the respective query time is determined by querying data of the respective participant by the edge device (ED).

5. The method according to claim 3, wherein the respective query time is determined in advance, stored, and made accessible to the edge device (ED).

6. The method according to claim 1 or 2, wherein the first cycle time and/or the second cycle time is determined such that a network participant (FG1, FG2, ..., GW2) is queried for the first time, all further network participants (FG1, FG2, ..., GW2) defined in the first application (AP1) or in the second application (AP2) are queried, and that time is measured as the first cycle time and/or the second cycle time which elapses until the network participant (FG1, FG2, ..., GW2) is queried again.

7. The method according to at least one of the preceding claims, wherein in the event that the determined first cycle time and/or the total cycle time falls below the at least one requirement, the respective information contains details of the available time until the at least one first requirement, or respectively second requirement, is exceeded, and wherein the respective information is determined by additionally querying the network participants (FG1, FG2, ..., GW2) defined by the first filter or respectively by the second filter via the edge device (ED).

8. The method according to claim 7, wherein the respective information comprises a number of possible additional network participants (FG1, FG2, ..., GW2) of at least one device type, wherein an average query time is assigned to a device type, which is in particular determined by querying one of the network participants (FG1, FG2, ..., GW2) of this device type, wherein the number is calculated based on the available time and the average query time.

9. The method according to at least one of the preceding claims, wherein at least one part of the network participants (FG1, FG2, ..., GW2) comprises field devices of automation technology.

10. The method according to at least one of the preceding claims, wherein at least one part of the network participants (FG1, FG2, ..., GW2) comprises control components or gateways.

11. An edge device (ED) configured for use in a method according to at least one of claims 1 to 10.

## Revendications

1. Procédé de diagnostic du fonctionnement d'un dispositif Edge (ED), le dispositif Edge (ED) étant en liaison de communication avec une pluralité de participants du réseau (FG1, FG2, FG3, FG4, GW1, GW2) via un ou plusieurs réseaux de communication (KN1), le dispositif Edge (ED) étant en liaison de communication avec une base de données (DB) via un autre réseau de communication (KN2), au moins une première application (AP1) s'exécutant sur le dispositif Edge (ED), et le dispositif Edge (ED) interrogeant les données de ceux des participants du réseau (FG1, FG2, ..., GW2) définis par un premier filtre accessible à la première application (AP1), le procédé comprenant :
• Déterminer un premier temps de cycle de la première application (AP1), le premier temps de cycle désignant l'intervalle de temps entre deux interrogations d'un participant du réseau défini dans la première application (AP1) ; le premier temps de cycle étant déterminé en additionnant un temps d'interrogation respectif de chacun des participants du réseau (FG1, FG2, ..., GW2) définis dans la première application (AP1), chaque temps d'interrogation étant constitué d'une part active et d'une part passive, la part active correspondant au temps directement nécessaire pour l'interrogation, et la part passive définissant une pause entre la fin de l'interrogation active d'un participant du réseau (FG1, FG2, ..., GW2) et le début de l'interrogation active du participant du réseau suivant (FG1, FG2, ..., GW2) ;
• Comparer le temps de cycle déterminé avec au moins un premier temps d'exigence relatif aux participants du réseau (FG1, FG2, ..., GW2) définis dans la première application (AP1) ;
• Produire une information indiquant si le premier temps de cycle déterminé dépasse ou non ledit premier temps d'exigence, et, dans le cas où la première exigence n'est pas satisfaite, l'information comprenant au moins une mesure de réduction du premier temps de cycle, la part passive du temps d'interrogation d'un ou de plusieurs participants du réseau étant réduite en déclenchant plus tôt l'interrogation du participant du réseau suivant.

2. Procédé selon la revendication 1, dans lequel au moins une seconde application (AP2) s'exécute sur le dispositif Edge (ED), le dispositif Edge (ED) interrogeant en outre les données des participants du réseau (FG1, FG2, ..., GW2) définis par un second filtre accessible à la seconde application (AP2), une seconde durée de cycle de la seconde application (AP2) étant également déterminée, la seconde durée de cycle désignant l'intervalle de temps entre deux interrogations d'un participant du réseau défini dans la seconde application (AP2), une durée totale de cycle étant calculée sur la base de la première et de la seconde durée de cycle, la durée totale de cycle étant comparée à au moins un second temps d'exigence relatif à un ou plusieurs participants du réseau (FG1, FG2, ..., GW2) définis dans la première application (AP1) et/ou dans la seconde application (AP2), et une information indiquant si la durée totale de cycle dépasse ou non le second temps d'exigence étant produite.

3. Procédé selon la revendication 2, dans lequel la seconde durée de cycle est déterminée en additionnant un temps d'interrogation respectif de chacun des participants du réseau (FG1, FG2, ..., GW2) définis dans la seconde application (AP2).

4. Procédé selon la revendication 3, dans lequel le temps d'interrogation respectif est déterminé par l'interrogation, par le dispositif Edge (ED), des données du participant du réseau concerné.

5. Procédé selon la revendication 3, dans lequel le temps d'interrogation respectif est déterminé préalablement, stocké et rendu accessible au dispositif Edge (ED).

6. Procédé selon la revendication 1 ou 2, dans lequel la première durée de cycle et/ou la seconde durée de cycle est déterminée en interrogeant un participant du réseau (FG1, FG2, ..., GW2) une première fois, en interrogeant ensuite tous les autres participants du réseau définis dans la première application (AP1), respectivement dans la seconde application (AP2), et en mesurant comme première ou seconde durée de cycle le temps écoulé jusqu'à ce que le participant du réseau (FG1, FG2, ..., GW2) soit de nouveau interrogé.

7. Procédé selon au moins l'une des revendications précédentes, dans lequel, lorsque la première durée de cycle déterminée et/ou la durée totale de cycle est inférieure à au moins une exigence, l'information respective comprend des indications concernant le temps disponible jusqu'au dépassement de ladite première ou seconde exigence, l'information étant déterminée par une interrogation supplémentaire, par le dispositif Edge (ED), des participants du réseau (FG1, FG2, ..., GW2) définis par le premier filtre ou par le second filtre.

8. Procédé selon la revendication 7, dans lequel l'information respective comprend un nombre de participants du réseau (FG1, FG2, ..., GW2) supplémentaires possibles d'au moins un type d'appareil, un temps d'interrogation moyen étant associé à un type d'appareil, ce temps étant déterminé notamment par l'interrogation d'un des participants du réseau (FG1, FG2, ..., GW2) de ce type d'appareil, le nombre étant calculé sur la base du temps disponible et du temps d'interrogation moyen.

9. Procédé selon au moins l'une des revendications précédentes, dans lequel au moins une partie des participants du réseau (FG1, FG2, ..., GW2) sont des appareils de terrain de la technique d'automatisation.

10. Procédé selon au moins l'une des revendications précédentes, dans lequel au moins une partie des participants du réseau (FG1, FG2, ..., GW2) sont des composants de commande ou des passerelles.

11. Dispositif Edge (ED), conçu pour être utilisé dans un procédé selon au moins l'une des revendications 1 à 10.
